Europäisches Patentamt

European Patent Office

Office européen des brevets

(11) Publication number: **0 069 194**
**B1**

# EUROPEAN PATENT SPECIFICATION

(45) Date of publication of patent specification: **02.01.86**

(51) Int. Cl.⁴: **B 23 B 31/20**

(21) Application number: **82102237.3**

(22) Date of filing: **18.03.82**

(54) **Collet adapter.**

(30) Priority: **07.07.81 US 281098**

(43) Date of publication of application:
**12.01.83 Bulletin 83/02**

(45) Publication of the grant of the patent:
**02.01.86 Bulletin 86/01**

(84) Designated Contracting States:
**AT BE CH DE FR GB IT LI LU NL SE**

(56) References cited:
**FR-A-1 019 344**
**US-A-2 478 195**
**US-A-3 874 688**

(73) Proprietor: **HARDINGE BROTHERS INC.**
**1420 College Avenue**
**Elmira New York 14902 (US)**

(72) Inventor: **Atkinson, Joseph W. III**
**818 Grand Central Avenue**
**Horseheads New York 14845 (US)**

(74) Representative: **Prato, Roberto et al**
**c/o Ingg. Carlo e Mario Torta Via Viotti 9**
**I-10121 Torino (IT)**

Courier Press, Leamington Spa, England.

## Description

This invention relates to a collet adapter, and in particular an adapter for use with a machine tool which is designed to accept a specific size collet, wherein the user wishes to use a smaller collet of lesser capacity.

Background and objects

In the machine tool industry, machines such as lathes, chucking machines, and the like are available with a significant variety of spindle sizes and capacity. The spindle sizes available depend to some extent upon the manufacturer of the machine as well as the type of work which it is intended to handle. A number of different so-called "standard" size spindles are used.

For example, a "5C" is a rather common size collet/spindle for a number of different machines. Another larger spindle is the American National Standard Institute (ANSI) "A2—5" spindle which may be made to accept the larger 16C collets, which in turn accept larger diameter work. Many machine shops would like to have the capability of using the larger 16C collets, but also need the smaller 5C collets. Such machine shops may have only an occasional need for the larger capacity of the 16C collets, and may have a larger inventory of 5C collets for work up to 27 mm. (1—1/16 inch) round. Thus, the adapter of the present invention permits use of the smaller collets on the larger size spindle machines.

In addition, conventional spindle tooling such as live centers, expanding collets, etc., which have the external configuration of the smaller collet could also be used with the adapter and the smaller size collet.

The prior art reveals an adapter also intended for adapting a smaller collet to a large spindle. U.S. Patent 2,478,195 discloses such an adapter which includes a tapered head portion slideably engaged with a threaded tubular portion. The tubular portion in turn threadedly engages the draw tube of the machine tool on its exterior surface and threadedly receives the smaller diameter on its interior surface. However, this prior structure suffers from several disadvantages. Specifically, upon release of the draw tube for releasing the work, there is no positive release of the collet. Instead of pushing the collet out of the head portion, to release the work, the adapter is just as likely to push its head portion out of the spindle while retaining full gripping pressure on the workpiece. In addition, the connection between the head portion and the tubular portion of this adapter is such that significant wear can result between the two pieces which in turn can reduce the accuracy of the machine tool.

Accordingly, it is a primary object of the present invention to provide an improved adapter for adapting a collet of a given size to a larger size machine tool spindle.

Another object of the invention is to provide a collet adapter which is spring biased into the spindle even when the collet is released.

A further object of the invention is to provide a collet adapter of improved construction.

These and other objects and advantages of this invention will become apparent when considered in light of the following description of an embodiment of the invention when taken together with the accompanying drawings.

Description of the drawings

Figure 1 is a longitudinal cross section of the collet adapter of the embodiment mounted within a spindle;

Figure 2 is a longitudinal cross section of the collet adapter of the embodiment; and

Figure 3 is a longitudinal cross sectional view of a modified form of an adapter bushing.

Description of the invention

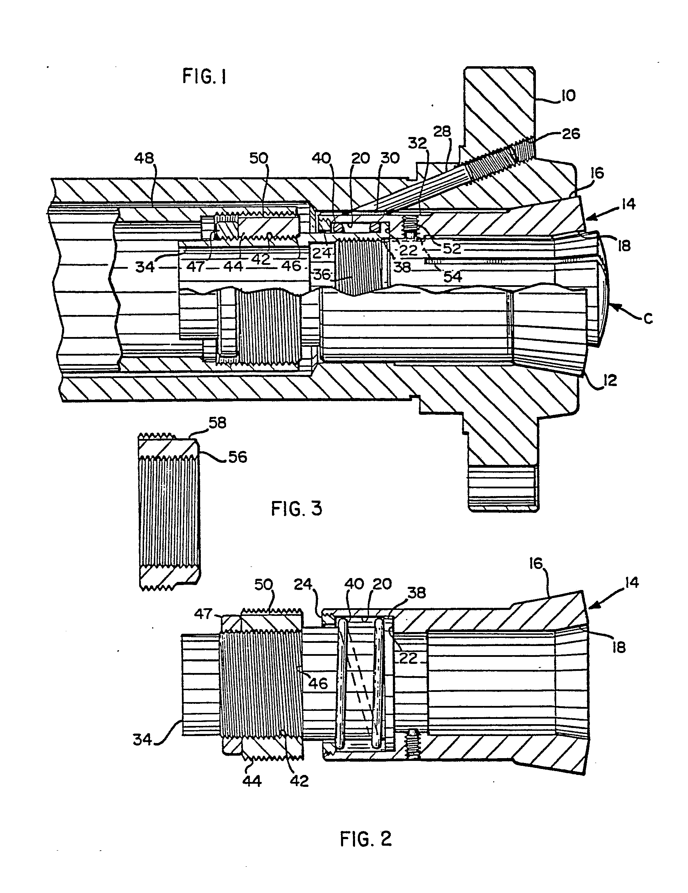

Referring to Figure 1, a machine tool spindle 10 is provided of substantially conventional construction, and as such includes the usual tapered camming surface 12. A reducer bushing 14 is inserted within the spindle and includes an outer tapered surface 16 at the same angle as the surface 12, and an inner tapered surface 18 which is at the same angle as the smaller size collet C being used.

The reducer bushing 14 has at its inner end a portion 20 of an enlarged internal diameter having a shoulder 22 at one end and threaded at the innermost end so as to receive a retaining nut 24 as shown or other retainer such as a snap ring.

The spindle 10 is drilled and tapped at 26 so as to receive· a key screw 28 of conventional configuration. The key screw 28 has a projecting key tang 30 which is engageable with a keyway 32 formed in the adapter bushing 14.

A draw tube 34 is provided and includes internal threads 36 engageable with the standard threads on the collet C, and also includes at its forward end an outwardly turned flange 38. A coil spring 40 is provided in the space between the flange 38 and the lock nut 24, and is held in place by the lock nut or retainer 24. Thus the coil spring 40 serves to urge the flange 38 of the draw tube 34 against the shoulder 22 of the reducer bushing 14, as shown in Figure 1, thus urging the attached collet C out of the reducer bushing 14 to effect a positive release of the work in the collet.

The draw tube 34 is externally threaded as at 42 so as to threadedly receive an adapter bushing 44 against shoulder 46. The adapter bushing 44 is secured in this position against the shoulder 46 by means of the lock nut 47 which is tightened against the bushing 44. The bushing 44 is externally threaded so as to engage the draw spindle 48 of a conventional collet actuating mechanism (not shown). In addition, the bushing 44 is provided with a keyway 50 so positioned as to be in axial alignment with keyway 32 when the bushing is tightened against the shoulder 46. In some cases, due to normal wear or play of the adapter bushing 44, when the bushing engages the shoulder 46, the keyways 50 and 32 may not be in alignment. In some cases, the bushing 44 may be backed off slightly until the keyways are in alignment, whereupon tightening of the lock nut 47 will hold the alignment.

A key screw 52 is provided in the reducer bushing 14 so as to engage a keyway 54 in the collet $C$, and prevent relative rotation of the collet $C$ within the bushing 14.

To assemble the reduced size collet within the adapter and the machine tool spindle, with all parts disassembled the draw tube 34 with the spring 40 in place around the draw tube 34 is inserted into the recess 20 of the reducer bushing 14, and secured by the lock nut or retainer 24. The collet $C$ is then inserted into the reducer bushing 14 and threaded fully into the draw tube 34. The collet $C$ is rotated within the reducer bushing 14 until the keyway 54 aligns with the key screw 52, to prevent relative rotation of the collet $C$ and the reducer bushing 14. Next, the adapter bushing 44 is threaded fully onto the draw tube 34 so as to abut the shoulder 46, and is adjusted and secured in place by the lock nut 47 as described above. At this point, the keyway 50 should be axially aligned with the keyway 32.

The key screw 28 is inserted into the spindle to the extent that the tang 30 projects slightly beyond the inside wall of the spindle 10. The reducer bushing 14 with the assembled draw tube 34 and collet $C$ and adapter bushing 44 are then inserted into the spindle 10 as the tang 30 passes through the keyways 50 and 32. The draw spindle 48 is then rotated into threaded engagement with the adapter bushing 44, and the assembly is then adjusted according to normal procedures for use.

Alternatively, Figure 3 shows an adapter bushing 56 similar to bushing 44, but wherein the threads are cut away as at 58, so that after the bushing is inserted into the spindle, and the keyway on the bushing 56 has passed the projecting tang 30, the assembly may be rotated slightly to the extent that the tang 30 will be aligned with and engage the keyway 32. In this case, it is not necessary that the two keyways be in axial alignment.

It will be seen from the foregoing description that when the collet actuator is activated so as to close the collet $C$ by drawing it into the reducer bushing 14, spring 40 will be compressed as the shoulder 38 moves to the left as seen in Figure 1. In this manner, the reducer bushing 14 is urged into the spindle 10 by the spring force until the collet $C$ engages the surface 18 of the bushing 14 whereupon the collet is closed onto the workpiece. Likewise, when the collet actuator is activated so as to release the work by moving the collect $C$ to the right as shown in Figure 1, the spring tension continues to urge the bushing 14 into the spindle 10 as the collet $C$ is moved to the right, i.e., to the open position. In this manner, a positive release of the work in the collet is achieved and the reducer bushing 14 is retained firmly seated in the spindle 10 to maintain accuracy, keep dirt, chips and coolant out of the spindle and reduce wear on the spindle.

While this invention has been described as having a preferred design, it will be understood that it is capable of further modification. This application, is therefore, intended to cover any variations, uses, or adaptations of the invention following the general principles thereof and including such departures from the present disclosure as come within known or customary practice in the art to which this invention pertains, and as may be applied to the essential features hereinbefore set forth and fall within the scope of the claims.

## Claims

1. A device for adapting a collet (C) to an oversize spindle (10) on a machine tool, comprising a generally tubular reducer bushing (14) having an external configuration sized such as to fit with the oversize spindle and an internal configuration sized as to receive the collet (C), said reducer bushing having an annular shoulder (22) on the interior thereof forming the forward axial end of an annular recess (20), means forming the rearward axial end of said annular recess (20), a draw tube (34) adapted to engage a collet (C) and positioned at least partially within said reducer bushing (14), said draw tube (34) including a radial projection (38) extending into said recess (20), and means (44) for connecting said draw tube (34) to a collet actuating device (48), characterised by a retainer member (24) engaging said reducer bushing (14) providing the said rearward axial end of said annular recess (20), and spring means (40) positioned in said recess (20) for urging said draw tube (34) axially forwardly in said reducer bushing (14).

2. A device as in Claim 1 and characterized by the fact that said spring means (40) comprises a coil spring surrounding said draw tube (34) and bearing against said radial projection (38) which is in the nature of a radially outwardly directed flange.

3. A device as in Claim 2 and wherein said retainer member comprises a retainer nut (24) threadedly engaging said reducer bushing.

4. A device as in Claim 1 or 3 wherein said connecting means comprises a threaded rear portion (42) on said draw tube and an adapter bushing (44) threadedly engaging said rear portion of said draw tube.

5. A device as in Claim 4 and including a lock nut (47) for securing said adapter bushing on said draw tube.

6. A device as in Claim 5 and including key means (28) for preventing relative rotation of said reducer bushing in the spindle.

7. A device as in Claim 6 and wherein said key means includes keyways (32) (50) formed in the exterior surface of said reducer bushing and said adapter bushing and a key member (30) projecting from the interior of the spindle so as to progressively engage the keyway in said adapter bushing and the keyway in said reducer bushing as the device is inserted into a spindle.

8. A device as in Claim 7 and wherein said keyways are axially aligned.

9. A device as in Claim 8 and wherein said keyways are axially spaced a distance greater than the axial length of said key member so that said device may be rotated within a spindle when said device is inserted in the spindle to the extent that said key member has passed through the keyway in said adapter bushing and before said key member enters the keyway in said reducer bushing.

10. A device as in Claim 9 and wherein said adapter bushing is threaded along substantially its entire axial outer surface.

## Revendications

1. Dispositif pour l'adaptation d'une douille de serrage, ou pince américaine (C) à une broche de dimension supérieure (10) sur une machine-outil, comprenant une douille de réduction de manière générale tubulaire (14) dimensionnée extérieurement de façon à s'accorder avec la broche de dimension supérieure et dimensionnée intérieurement de façon à recevoir la pince (C), cette douille de réduction ayant à l'intérieur un épaulement annulaire (22) fermant l'extrémité axiale avant d'une cavité annulaire (20), un moyen formant l'extrémité axiale arrière de cette cavité annulaire (20), un tube tracteur (34) prévu pour venir en prise avec la pince (C) et placé au moins en partie dans la douille de réduction (14), ce tube tracteur (34) comportant une saillie radiale (38) entrant dans la cavité (20) et un moyen (44) de liaison du tube tracteur (34) à un dispositif de commande de pince (48), caractérisé par un élément d'arrêt (24) venant en prise avec la douille de réduction (14) et formant l'extrémité axiale arrière de la cavité annulaire (20), et un moyen élastique (40) placé dans cette cavité (20) pour rappeler le tube tracteur (34) axialement vers l'avant dans la douille de réduction (14).

2. Dispositif selon la revendication 1, caractérisé par le fait que le moyen élastique (40) est un ressort hélicoïdal entourant le tube tracteur (34) et appuyé contre la saillie radiale (38), qui est un collet dirigé radialement vers l'extérieur.

3. Dispositif selon la revendication 2, dans lequel l'élément d'arrêt est un écrou d'arrêt (24) en prise par son filetage avec la douille de réduction.

4. Dispositif selon l'une des revendications 1 et 3, dans lequel le moyen de liaison comprend une partir arrière filetée (42) sur le tube tracteur et une bague d'adaptation (44) en prise par un filetage avec cette partie arrière du tube tracteur.

5. Dispositif selon la revendication 4, comportant un écrou de blocage (47) destiné à fixer la bague d'adaptation sur le tube tracteur.

6. Dispositif selon la revendication 5, comportant un moyen de clavetage (28) destiné à empêcher la rotation relative de la douille de réduction dans la broche.

7. Dispositif selon la revendication 6, dans lequel le moyen de clavetage comporte des rainures de clavette (32, 50) faites dans la surface extérieure de la douille de réduction et de la bague d'adaptation et un élément clavette (30) saillant de l'intérieur de la broche de façon à s'engager progressivement dans la rainure de clavette de la bague d'adaptation et la rainure de clavette de la douille de réduction quand on introduit le dispositif dans la broche.

8. Dispositif selon la revendication 7, dans lequel les rainures de clavette sont alignées axialement.

9. Dispositif selon la revendication 8, dans lequel les rainures de clavette sont espacées axialement d'une distance supérieure à la longueur axiale de l'élément clavette de façon que le dispositif puisse être tourné dans la broche quand il y est introduit d'une quantité telle que l'élément clavette a franchi la rainure de clavette de la bague d'adaptation et n'est pas encore entré dans la rainure de clavette de la douille de réduction.

10. Dispositif selon la revendication 9, dans lequel la bague d'adaptation est filetée sur pratiquement toute sa surface axiale extérieure.

## Patentansprüche

1. Gerät zum Adaptieren einer Spannzange (C) an eine überdimensionierte Spindel (10) einer Werkzeugmaschine, umfassend eine im wesentlichen rohrföhrmige Reduzierbüchse (14) deren Außendimensionierung an die überdimensionierte Spindel angepaßt ist und deren Innendimensionierung zur Aufnahme der Spannzange (C) angepaßt ist, wobei die Reduzierbüchse eine ringförmige Schulter (22) auf der Innenseite derselben aufweist, die das vordere axiale Ende einer ringförmigen Ausnehmung (20) bildet, Einrichtungen die das hintere Ende der ringförmigen Ausnehmung (20) bilden, einen Ausziehtubus (34) zur Aufnahme der Spannzange (C), der zumindest teilweise innerhalb der Reduzierbüchse (14) angeordnet ist, wobei der Ausziehtubus (34) einen radialen Ansatz (38) aufweist, der sich in die Ausnehmung (20) erstreckt, und Einrichtungen (44) zum Verbinden des Ausziehtubus (34) mit einer Spannzangen-Betätigungseinrichtung (48), gekennzeichnet durch einen Haltekörper (24), welcher die Reduzierbüchse (14) aufnimmt und das genannte hintere axiale Ende der ringförmigen Ausnehmung (20) bildet, und Federeinrichtungen (40), welche in der Ausnehmung (20) angeordnet sind und der Ausziehtubus (34) axial nach vor in die Reduzierbüchse (14) drücken.

2. Gerät nach Anspruch 1, dadurch gekennzeichnet, daß die Federeinrichtungen (40) eine Schraubenfeder umfassen, welche den Ausziehtubus (34) umgibt und gegen den radialen Ansatz (38) drückt, der als radial nach außen gerichteter Flansch ausgebildet ist.

3. Gerät nach Anspruch 2, dadurch gekennzeichnet, daß der Haltekörper einen Haltering (24) umfaßt, der mit der Reduzierbüchse über ein Gewinde verbunden ist.

4. Gerät nach Anspruch 1 oder 3, dadurch gekennzeichnet, daß die Verbindungseinrichtungen einen Gewindebereich (42) auf dem Ausziehtubus und eine Adapterbüchse (44) umfassen, die über ein Gewinde mit dem hinteren Bereich des Ausziehtubus verbunden ist.

5. Gerät nach Anspruch 4, dadurch gekennzeichnet, daß ein Haltering (47) zur Sicherung der Adapterbüchse auf dem Ausziehtubus vorgesehen ist.

6. Gerät nach Anspruch 5, dadurch gekennzeichnet, daß Verriegelungseinrichtungen (28) zur Verhinderung einer relativen Verdrehung der Reduzierbüchse in der Spindel vorgesehen sind.

7. Gerät nach Anspruch 6, dadurch gekennzeichnet, daß der Verriegelungseinrichtungen Verriegelungsnuten (32) (50) umfassen, die an der Außenfläche der Reduzierbüchse und der Adapterbüchse angeordnet sind, sowie einen Verriegelungskörper (30), der sich von der Innenseite der Spindel aus erstreckt, um fortschreitend die Nut in der Adapterbüchse und die Nut in der Reduzierbüchse aufzunehmen, wenn das Gerät in eine Spindel eingesetzt wird.

8. Gerät nach Anspruch 7, dadurch gekennzeichnet, daß die Nuten axial ausgerichtet sind.

9. Gerät nach Anspruch 8, dadurch gekennzeichnet, daß die Nuten axial um eine Distanz versetzt sind, die größer als die axiale Länge des Verriegelungskörpers sind, sodaß das Gerät innerhalb einer Spindel bis zu einem Ausmaß drehbar ist, wenn das Gerät in die Spindel eingesetzt wird, bis der Verriegelungskörper die Nut in der Adapterbüchse passiert hat und bevor der Verriegelungskörper in die Nut in der Reduzierbüchse eingreift.

10. Gerät nach Anspruch 9, dadurch gekennzeichnet, daß die Adapterbüchse im wesentlichen auf ihrer gesamten axialen Außenfläche mit einem Gewinde versehen ist.

**0 069 194**

FIG. 1

FIG. 3

FIG. 2